# EUROPEAN PATENT APPLICATION

(11) **EP 2 500 484 A1**
(43) Date of publication of application: **19.09.2012**
(21) Application number: 11158808.3
(22) Date of filing: 18.03.2011
(51) Int. Cl.: E04C 2/36, B32B 3/12, C04B 14/20, E04B 1/94

(54) **Fire resistant sandwich panel**

(71) Applicant: RService, 3052 Blanden (BE)
(72) Inventor: Sjerps, Rinus, 3052, Blanden (BE)
(74) Representative: BiiP cvba

(57) **Abstract**

The present invention concerns a light weight sandwich panel for the building industry and also in other industries such as transportation, marine- and aerospace industry having high fire resistance, comprising:
(a) a honeycomb core (1) made of a polymeric material;
(b)a first skin facing (2A) applied to a first main face of the honeycomb core (1) comprising a first polymeric material layer (3A) in contact with the honeycomb or with an adhesive applied to the honeycomb;
(c) a second skin facing (2B) applied to the second main face of the honeycomb core (1) and comprising a first layer (3B) of second polymeric material in contact with the honeycomb or with an adhesive applied to the honeycomb, and

Characterized in that,

The cells of the honeycomb core are at least partially filled with a mixture (4) of crude vermiculite particles (5A) and exfoliated vermiculite particles (5B).

## Description

### Technical Field

The present invention relates to a cost effective, fire resistant, lightweight panel suitable for bulkhead applications in the building industry and also in other industries such as transportation and aerospace. In particular it concerns a honeycomb core sandwich structure with the honeycomb cells filled a mixture of vermiculite particles, optionally bound by a water glass based binder.

### Background for the invention

Typical non-load bearing bulkheads in the building industry are composed of plaster, calcium silicate, cement, or gyproc boards. This kind of panels generally show good fire resistance, but they are also very heavy with densities of the order of 800 kg / m³ yielding a weight of more than 30 kg for a standard 12.5 mm thick panel of 2800 x 1200 mm dimensions. Such panels require two craftmen or a machine to handle and cannot be used in weight sensitive applications such as transportation and aerospace. An example of fire resistant panel comprising vermiculite, ceramic clay particles and hydrated cellulosic gel is disclosed in US4043862.

Lighter boards are commercialized under the name Promatect--L, which comprise steam hardened calcium silicate, cement, fibres, and additives and have a density of about 450 kg/m³. Their lower density is obtained by increasing the porosity of the material which, however, is detrimental to their mechanical properties. In particular, these panels are more brittle and can break easily, with a rather low impact strength and are therefore used principally for ceilings and protection of steel constructions. Fipro commercializes a vermiculite based panel under the name Mansard, with a density of 475 kg/m³. Like the previous ones, these boards are not applied for bulkheads but for ceilings because of their low impact strength
(cf. http://www.architectenweb.nl/aweb/bedrijvengids/bedrijf.asp?iPID=6002).

A lightweight non combustible panel suitable for applications in the building industry is disclosed in JP2005254478. It consists of a sandwich structure with a sepiolite honeycomb core with two thick skin panels made of 40 wt.% vermiculite with calcium silicate. In spite of a moderate density thanks to the sandwich structure, the boards described therein are still quite heavy to handle due to their high thickness.

EP024462 discloses a complex sandwich structure with a central septum layer comprising a vermiculite--glass fibre layer bond on its two faces to two honeycomb core layers by a phenolic adhesive. The structure comprises two external skins glued to the other faces of the two honeycomb cores with a phenolic resin and comprising vermiculite, paper, and glass fibres. The honeycomb cores can be made of nylon paper and the cell walls thereof may be coated with 1-4 wt.% vermiculite 80-96 wt.% sodium silicate and 2-15 wt.% phenolic resin. This structure is quite complex and expensive due to the numerous layers composing it.

Us5305577 discloses a fire door comprising a paper honeycomb structure with two outer skins made of a composition comprising a substantially uniform distribution of solids including about 65 wt.% to about 90 wt.% of gypsum dehydrate, about 7wt.% to about 30 wt.% paper fibres, and about 1.5 wt.% to about 35 wt.% of one or more performance boosters selected from inorganic fiber, clay, vermiculite, and binder polymer.

KR20040049061 discloses an interlayer sound damping panel to be used in multi-storied buildings. The panel is laid between a base floor layer and a finishing concrete top layer. It consists of a sandwich structure with a central honeycomb core with a protective layer such as a net applied on each face thereof. The honeycomb cells are filled with loose exfoliated vermiculite particles. Upon cutting a panel to the dimensions required for a specific application, the particles contained in the honeycomb cells which are cut open invariably fall generating dust.

Similarly, JP10266388 discloses a noise damping panel particularly suitable for panels in motor vehicles, said panel comprising an aluminium honeycomb core with aluminium skins, with the honeycomb cells being filled with particulate silica balloons, vermiculite, perlite, or acrylic spheres.

There remains a need in the art for low cost, light weight, fire resistant panels that can be used for bulkheads, preferably bulkheads in the building industry which can bear a fixed load, but also in the transportation, marine and aerospace industries. The present invention provides a solution to this and other problems.

### Summary of the invention

The present invention is defined in the appended independent claims. Preferred embodiments are defined in the dependent claims. In particular, the present invention concerns a light weight sandwich panel suitable for applications in the building, transportation, marine and aerospace industries having high fire resistance, and comprising:
(a) a honeycomb core made of a polymeric or cellulosic-material;
(b)a first skin facing applid to a first main face of the honeycomb core comprising a first polymeric material layer in contact with the honeycomb or with an adhesive applied to the honeycomb;
(c) a second skin facing applied to the second main face of the honeycomb core and comprising a first layer of second polymeric material in contact with the honeycomb
or with an adhesive applied to the honeycomb, and
Characterized in that,

The cells of the honeycomb core are at least partially filled with a mixture (4) of crude vermiculite particles and exfoliated vermiculite particles.

In a preferred embodiment, the vermiculite particles are at least partly bound by binder, preferably a water glass based binder, to prevent segregation of the crude and exfoliated vermiculite particles within the cells, reduce production of dust when cutting a panel, and also increasing fire resistance. The binder is preferably present in an amount comprised between 0 and 60 wt.% with respect to the total weight of the mixture, preferably between 5 and 40 wt.%, more preferably between 10 and 25 wt.%

The amount of crude vermiculite in the mixture is such as to expand upon exposure to a temperature higher than 500°C to a volume allowing the complete filling of the cells and furthermore compensating for the loss of volume generated by the combustion of the polymeric honeycomb walls at said temperature. In particular, the vermiculite particles may comprise between 1 and 30 wt.% crude vermiculite), preferably between 2 and 20 wt.%, more preferably between 5 and 10 wt.%, with respect to the total weight of crude and exfoliated vermiculite particles.

The honeycomb core is preferably made of any of PE, PP, PET. In one embodiment, the polymeric material of the first and second skin layers are welded to the honeycomb core, without adhesive. In an alternative embodiment, the skin facings are glued to the honeycomb core. The adhesive used preferably is a polyolefinic reactive hotmelt or may be inorganic such as comprising sodium silicate. Regardless of how the skin facings are bonded to the honeycomb core, it is preferred that the honeycomb core and the first and second polymeric materials of the first and second skin facings belong to the same chemical family. To increase the mechanical properties of the panel, the polymeric material may be reinforced with glass fibers, preferably with continuous glass fibres arranged in a weave, a braid, a knit, or unidirectionally.

The first and/or second skin facings may advantageously comprise at least one vermiculite layer which is not in contact with the honeycomb core. Additionally or alternatively, one or both skin facings may comprise a metal layer as well as a top decorative layer facing ambient and made of any of a fire retarded or fire resistant cellulosic material, melamine, veneer, high pressure laminates etc., and combinations thereof.

The crude and exfoliated vermiculite particles preferably have a mean diameter comprised between 0.1 and 10 mm. more preferably between 0.1 and 5 mm and most preferably between 0.1 and 3 mm. The cells of the honeycomb need not be filled completely, and can contain a mixture of crude and exfoliated vermiculite particles, optionally bound by a water glass based binder to a volume compriseed between 50 and 100 vol.% of the total volume of a cell, preferably between 70 and 95 vol.%, more preferably between 80 and 90 vol.%.

The panels of the present invention are lightweight and may have a density as low as 400 kg /m³, and even, less than 350 kg / m³.

The panels of the present invention can advantageously be used as bulkheads in the building industry. In particular, vertical partitioning bulkheads or ceilings. Furthermore, with their high ratio of mechanical properties to density, they can quite advantageously be used in fire sensitive applications where high mechanical properties and a low weight are required, such as in the transportation industry (trains, cars, lorries, buses), marine industry (vessels, yachts) and the aerospace industry.

### Brief description of the Figures

For a fuller understanding of the nature of the present invention, reference is made to the following detailed description taken in conjunction with the accompanying drawings in which:

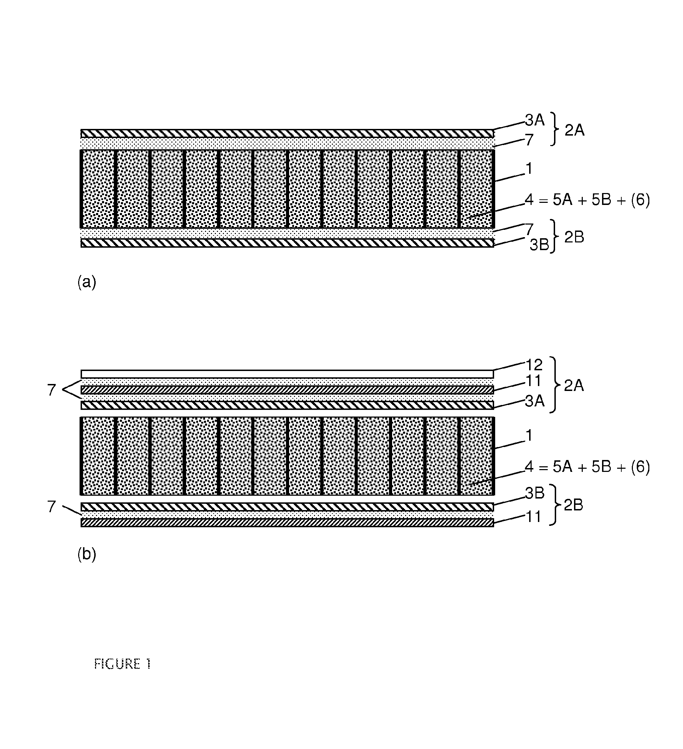

**Figure 1****:** shows two embodiments of panels according to the present invention.
**Figure 2****:** shows the volume expansion of the panel when exposed to a temperature rise such as by exposure to a fire.

### Detailed description of the invention

The present invention concerns light weight, fire resistant boards for use, in particular, as bulkheads in the building industry. To reduce the density of the panel, a sandwich structure with a honeycomb core (1) is used in the present invention, with a first and second skin facings (2A, 2B) applied to the first and second main faces of said honeycomb core (1). The honeycomb core is made of a polymeric material or a cellulosic material. Preferably the honeycomb core (1) is made of PE, PP and PET. Most preferably it is made of a polyolefin like PE, or PP. The skin facings (2A, 28) may comprise one or several layers, but in all cases they contact the main faces of the honeycomb core (1) with a first and second polymeric layers (3A, 3B). The first and second polymeric layers (3A, 3B) are bonded to the honeycomb core (1) by welding or by application of an adhesive (7). Welding can be achieved by any welding technique known to the person skilled in the art, such as ultrasonic welding, thermal bonding, solvent bonding and so on. It is preferred to heat the surface of the polymeric layer well above its glass transition temperature and laminate it hot onto a main surface of the honeycomb panel (1) with pressure. Of course this technique is limited to thermoplastic materials. A similar bonding can be achieved with both thermoplastic and thermosetting materials by partially solving a thin layer of the polymeric sheet (3A, 38) to soften its surface, and then laminate it onto the honeycomb panel. By evaporation of the solvent the surface of the sheet solidifies again. This technique has the inconvenience of consuming solvents which may cause discomfort during manufacturing, and which must be eliminated to avoid the presence of any solvent in the honeycomb cells after the two skins are applied to the core. Welding techniques, in particular thermal welding, are particularly suitable if the honeycomb core and the polymeric layer (3A, 38) are made of a polymer of the same chemical family, such as polyolefin's, polyesters, polyamides, and the like.

Alternatively, the first and second skin facings (2A, 2B) can be bonded to the honeycomb core material by means of an adhesive. Organic adhesives, such as epoxy, polyurethanes, etc. can be used. It is preferred, however, to use a polyolefin reactive hotmelt in case the honeycomb is composed of PP material, which provides excellent adhesive performance at PP surfaces. In another embodiment, a sodium silicate based adhesive can be used to bond the polymeric layers (3A, 3B) to the honeycomb core or to a top layer such as paper, which has the advantage of further increasing the fire resistance of the panel. Examples of sodium silicate based adhesives are sold by Pull Rhenen under the name "empe glue" (cf. http://www.pullrhenen.nl/thermisch/en/empe_lijm.html). Here again, the polymeric layers (3A, 3B) may be made of the same chemical family as the honeycomb core (1), but with an adhesive (7), this is less critical as long as good bonding can be achieved between the materials In contact.

The polymeric layers (3A, 3B) of the skin facings (2A, 2B) are preferably made of one of a polyolefin, polyurethane, polyester, or polyamide. Low cost boards can be produced with polymeric layers made of a polyolefin, such as PE, or PP. The polymeric layers (3A, 3B) may be reinforced with glass fibres (short or continuous) to increase the mechanical properties of the panels, in particular the bending strength and stiffness, as well as the impact resistance. Continuous glass fibres, e.g., in the form of weaves can be used to further increase the mechanical performance of the panels, but the production costs increase accordingly.

The first and/or second skin facings (2A, 28) may comprise additional layers applied on top of the first and second polymeric layers (3A, 38). The expression "applied on top of" means herein in contact with the face of a layer facing towards ambient and away from the core. In particular, one or both skin facings (2A, 2B) may comprise one or more additional layers (11) which are not in contact with the honeycomb core. The additional layer (11) can be made of vermiculite. Vermiculite based compositions that can be used as a layer (11) of a skin facing (2A, 2B) of the panel are disclosed e.g., in US4043862 . Other type of layers (11) can be used, such as a metallic layer like (stainless) steel or aluminum. These types of layers provide additional fire resistance, bending-, impact-, and fixing strength. Fixing strength is the property of the panel to bear a load attached to the panel, perpendicular to the honeycomb core, without distortion of the panel.

The panels of the present invention may be used in applications where one or two faces are visible. The visible faces can be provided with a top layer (12), which may be a decorative layer. In one embodiment, the top layer (12) can be paper or any cellulosic material which can be painted upon very easily. Alternatively, the top layer (12) may have a decorative pattern. Again it could be a printed paper or any cellulosic material coated e.g., with melamine or other clearcoat. Alternatively, the top coat could be a veneer giving a wooden character to the panel or a high pressure laminate with a decorative design and classified as low flame spread surface material.

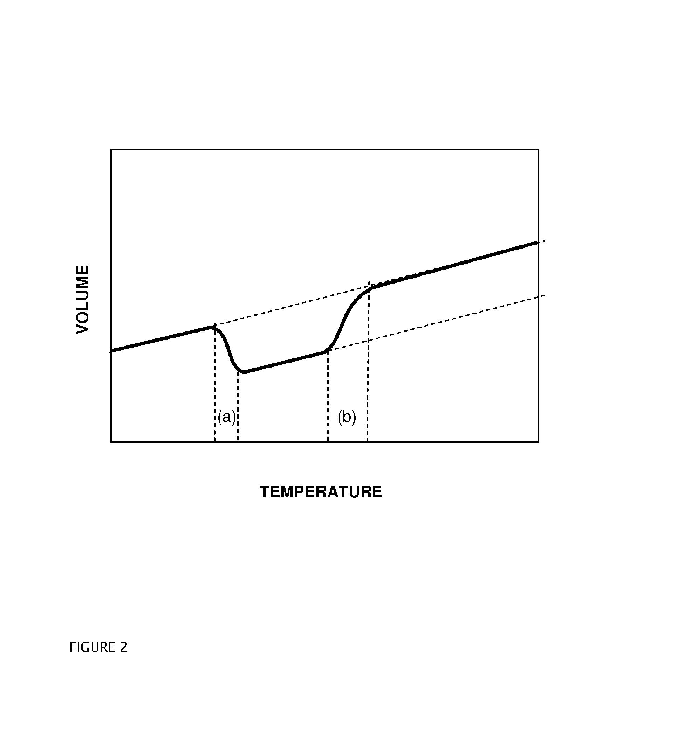

The mixture (4) of crude vermiculite particles (5A) and exfoliated vermiculite particles (5B) confer the fire resistance to the panels of the present invention which is required in most applications in the building industry, transportation, marine and aerospace industries. The crude vermiculite will expand when exposed to the heat of a fire. By properly dosing the amount of crude vermiculite, it is possible to ensure that during a fire, the vermiculite mixture will expand at a temperature above 500 °C such as to fill completely the cells, in case the cells were originally only partially filled, and also to compensate for the void created by the combustion and degradation of the honeycomb cell walls at high temperatures. This is illustrated schematically in Figure 2 where the panel expands linearly with increasing temperature, until the degradation temperature of the honeycomb walls is reached in region (a). The void thus created in the core of the panel is, however, rapidly filled by the expanding vermiculite upon exfoliation in region (b), which yields a bulky, solid core, ensuring mechanical stability of the panel during fire. In particular, the vermiculite particles mixture (5) may comprise between 1 and 30 wt.% crude vermiculite (5A), preferably between 2 and 20 wt.%, more preferably between 5 and 10 wt.%, with respect to the total weight of crude and exfoliated vermiculite particles.

Preferably, the vermiculite particles (5A, 5B) are at least partly bound by a binder (6). This has the advantage of not creating excessive dust when cutting a panel on a working site, thus exposing cells. Preferably, the binder is a water glass based binder such as "EMPE glue" supplied by Pull Rhenen B.V. This glue has a specific density of about 1500 kg/m³. Beside binding the particles, such binder further confers to the panel enhanced fire resistance and prevents segregation between the crude and exfoliated vermiculite within the cells. The content of binder (6) in the mixture (4) at least partially filling the honeycomb cells of the honeycomb core (1) is preferably comprised between 0 and 60 wt.% with respect to the total weight of the mixture, more preferably between 5 and 40 wt.%, most preferably between 10 and 25 wt.%.

Preferably the vermiculite particles (5,A, 5B) have a mean diameter comprised between 0.1 and 10 mm. more preferably between 0.1 and 5 mm and most preferably between 0.1 and 3 mm. The honeycomb cells can be filled to as much as 100 vol.% with the vermiculite particles mixture (5) and optionally with binder (6), but preferably, the cells are only partially filled with the mixture (4) to a volume compriseed between 50 and 100 vol.% of the total volume of a cell, preferably between 70 and 95 vol.%, more preferably between 80 and 90 vol.%. The content of crude vermiculite shall therefore be adapted to the level of filling of the cells of the honeycomb core, as their expansion should permit the complete filling of the unfilled volume as well as compensate for the void left by the thermal degradation of the honeycomb walls. This way, the panel maintains a sufficient mechanical resistance to not crumble down during exposure to a fire, since the core becomes bulky and self supporting.

The lightweight boards of the present invention have enhanced properties compared with the boards of the prior art. First, the polymeric layers (3A, 3B) of the skin facings (2A, 2B) confer to the board enhanced moisture resistance that allows them to be used for both inside and outside applications, The skins (2A, 2B) which can be fibre reinforced, combined with the honeycomb structure of the core (1) yield excellent impact resistance and show a very high flexural strength to density ratio. Furthermore, the lightweight boards of the present invention can resist forces resulting from the fixing thereto of heavy elements and can therefore be used as fixed load bearing bulkheads, which is generally not the case with similar panels made, e.g., of gyproc

It was surprisingly observed that the combination of a polymeric material with low fire resistance performance such as a polyolefin with vermiculite particles (5A, 5B), optionally bound with a water glass based binder (6) contained in the cells of the honeycomb core (1) of the panel, yielded a board with unexpectedly high fire resistance performance, In its simplest configuration, a board according to the present invention yields high mechanical properties, high fire resistance and low weight at a low production cost.

With the properties described above, boards according to the present invention are particularly suitable for use as bulkheads and ceilings in the building industry. They can also be used advantageously in the transportation industry, (automobiles, trains, lorries, buses) in the marine industry (vessels, ships and yachts) and in the aerospace industry like business jets and airliners. In view of their good mechanical properties, the panels of the present invention can be used as fixed load-bearing bulkheads.

The manufacturing of the panels according to the present invention is fairly simple and unexpensive. First, a first skin facing (2A) is bonded to a first main face of a honeycomb core. Next, a mixture (4) comprising the mixture of crude and exfoliated vermiculite particles (5A, 5B), optionally bound by a water glass containing binder (6) is poured into the honeycomb cells. The proportion of the two types of vermiculite is easy to calculate as a function of the expansion of the vermiculite during exfoliation, which can be obtained from the producer, the desired level of filling of the cells, and the volume of honeycomb walls. In case a binder (6) is used in the mixture (4), it may comprise a foaming agent to control the porosity of the mixture (4). Then a second skin facing (2B) is bonded to the second main face of the honeycomb core, thus sealing the honeycomb cells. The skins can be pre-heated prior to being laminated onto a face of the honeycomb core. Alternatively, an adhesive (7) can be applied to a face of the polymeric layer (3A, 3B) of the skin facings (2A, 2B) and then laminated onto one face of the honeycomb core (1).

In case the honeycomb core is produced by a continuous vacuum forming method as disclosed in AT474714 (T) which results in a half closed honeycomb core, its obvious that the cells can be fillled without first binding a skin to the honeycomb structure. When the cells are filled they can be closed by applying the skin. Hereafter the sheet should be turned upside down and filling of the remaining cells can follow with subsequent closing of the cells by the second skin.

If the skin facings (2A, 2B) comprise more than one layer (2A, 2B), the additional layers (11, 12) of the skin facings (2A, 28) can be laminated together by an adhesive (7). The adhesive can be the same or different from the one used to bond the polymeric layers (3A, 3B) to the honeycomb core (1). Preferably, the adhesive (7) used to bond the different laminae (3A, 3B, 11, 12) of the laminate (2A, 2B) is an organic adhesive or an inorganic adhesive such as a sodium silicate containing adhesive.

In most applications in the building industry, flat panels are needed, which can be produced at a high rate and in large volumes quite inexpensively using flat honeycomb sheets. In more specific applications, typically in the transportation and the aerospace industries, more complex shapes may be required. The skilled person knows techniques on how to produce three-dimensional complex geometries with honeycomb sandwich structures, and can use any of them with the panel of the present invention.

## Claims

1. A light weight sandwich panel for bulkhead applications in the building industry having high fire resistance, said panel comprising:
(a) a honeycomb core (1) made of a polymeric or cellulosic-material:
(b)a first skin facing (2A) applied to a first main face of the honeycomb core (1) comprising a first polymeric material layer (3A) in contact with the honeycomb or with an adhesive applied to the honeycomb;
(c) a second skin facing (28) applied to the second main face of the honeycomb core (1) and comprising a first layer (3B) of second polymeric material in contact with the honeycomb or with an adhesive applied to the honeycomb, and
**Characterized in that**,
The cells of the honeycomb core are at least partially filled with a mixture (4) of crude vermiculite particles (5A) and exfoliated vermiculite particles (5B).

2. Panel according to claim 1 wherein the vermiculite particles (5) are at least partly bound by a water glass based binder (6).

3. Panel according to the preceding claim, wherein the binder is present in an amount comprised between 0 and 60 wt.% with respect to the total weight of the mixture (4), preferably between 5 and 40 wt.%, more preferably between 10 and 25 wt.%

4. Panel according to any of the preceding claims, wherein the amount of crude vermiculite (5A) is such as to expand upon exposure to a temperature higher than 500°C to a volume allowing the complete filling of the cells and furthermore compensating for the loss of volume generated by the combustion of the polymeric honeycomb walls at said temperature.

5. Panel according to the preceding claim, wherein the vermiculite particles (5) comprise between 1 and 30 wt.% crude vermiculite (5A), preferably between 2 and 20 wt.%, more preferably between 5 and 10 wt.%, with respect to the total weight of crude and exfoliated vermiculite particles.

6. Panel according to any of the preceding claims, wherein the honeycomb core is made of any of PE, PP, PET

7. Panel according to any of the preceding claims, wherein the first and second skin layers (3A, 3B) are welded to the honeycomb core (1), without adhesive or, alternatively, are glued to the honeycomb core (1) with an adhesive (7), preferably but not limited to a sodium silicate based adhesive or a polyolefin reactive hotmelt.

8. Panel according to any of the preceding claims, wherein the honeycomb core (1) and the first and second polymeric materials of the first and second skin facings (3A, 3B) belong to the same chemical family.

9. Panel according to any of the preceding claims wherein the first and second polymeric materials of the first and second skin facings (3A, 3B) are reinforced with glass fibers, preferably with continuous glass fibres arranged in a weave, a braid, a knit, or unidirectional.

10. Panel according to any of the preceding claims, wherein the first and/or second skin facings (2A, 2B) comprise at least one additional layer (11) comprising vermiculite or metal and which is not in contact with the honeycomb core.

11. Panel according to any of the preceding claims, wherein a first skin facing comprises a top decorative layer (12) facing ambient and made of any of a cellulosic material, melamine, veneer or high pressure laminate with a decorative design

12. Panel according to any of the preceding claims, wherein the vermiculite particles (5A, 5B) have a mean diameter comprised between 0.1 and 10 mm. more preferably between 0.1 and 5 mm and most preferably between 0.1 and 3 mm.

13. Panel according to any of the preceding claims, wherein the cells of the honeycomb (1) are filled with a mixture (4) of crude and exfoliated vermiculite particles (5A, 58), optionally bound by a water glass based binder (6) to a volume comprised between 50 and 100 vol.% of the total volume of a cell, preferably between 70 and 95 vol.%, more preferably between 80 and 90 vol.%.

14. Panel according to any of the preceding claims, having a density of less than 400 kg / m³, preferably, less than 350 kg m³.

15. Use of a panel as defined in any of claims 1 to 13, as bulkhead and ceiling panel in the building industry.
